(19) Europäisches Patentamt
European Patent Office
Office européen des brevets

(11) EP 2 202 931 A1

(12) EUROPEAN PATENT APPLICATION

(43) Date of publication:
30.06.2010 Bulletin 2010/26

(51) Int Cl.:
*H04L 27/26* (2006.01)

(21) Application number: 08172808.1

(22) Date of filing: 23.12.2008

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **University College Cork**
**Cork City (IE)**

(72) Inventors:
• **Zhao, Jian**
**Cork City (IE)**

• **Ellis, Andrew**
**Co.Cork (IE)**

(74) Representative: **Lucey, Michael**
**PURDYLUCEY**
**Intellectual Property**
**Suite 138-139**
**The Chapel Building**
**Mary's Abbey**
**Dublin 7 (IE)**

(54) **Method and system for increasing spectral density in a communications network**

(57) The invention provides a system and method of increasing the spectral density of a channel for use in a communication system. The invention teaches spacing neighbouring sub-channels equal to 1/n times the symbol rate, wherein n is an integer larger than 1, in a communications system. The invention also discloses a novel methodology to extract transmitted information from received symbols so that the spectral density of the channel can be increased.

Figure 2A

**Description**

**Field of the Invention**

The invention relates to a method and system for increasing spectral density on a communication channel. The invention is particularly suitable for use in a mobile, wireless, wireline or an optical based communication network using coherent detection.

**Background to the Invention**

Coherent Wavelength Division Multiplexing (WDM), Orthogonal Frequency Division Multiplexing (OFDM) and other forms of multi-carrier transmission are well known techniques for either increasing the spectral efficiency, the capacity or the tolerance to impairments of a communication system. These techniques typically are constrained as they rely on spacing the carriers at frequency spacing equal to the symbol rate of each sub carrier. The telecommunication industry requires increased spectral density on each carrier to maximise capacity in a communication system.

It is highly desirable to increase the available capacity in a given spectral width where spectral resources are scarce, such as optical communication systems or in modern mobile radio systems. However a problem with capacity is that the amount of information on a channel in an optical communication system or mobile communication network is limited by available bandwidth.

For example, in a multi-carrier communication system using coherent WDM where the signal is square law detected, it is necessary to optimise the phases of a transmitter to control the temporal location of residual crosstalk even though the channel spacing is equal to the symbol rate. The residual crosstalk arises from imperfect system response. For a system where there is no dispersion in the receiver the optimum phase $\phi_k$ of the $k^{th}$ sub-channel is $\phi_k$ = $\phi_0$+k$\pi$/2 where $\phi_0$ is an arbitrary reference phase. However, if the receiver has dispersion (true for any practical demultiplexing filter) then the initial phases at the transmitter must be adjusted to take this into account. PCT Patent publication number WO 2007043032, assigned to University College Cork, discloses such a system and method to reduce residual crosstalk.

In the case of coherent, provided ideal (i.e. digital) system responses (overall transfer function of pulse shape, transmitter filter, optical filter, detector filter etc) are used, the crosstalk is identically zero, independent of the phase of the incoming signal. For example the detected signal from the $j^{th}$ channel, $V_j(t)$, can be represented by:

$$V_j(t) \propto 2 \cdot real\{E_{lo}E_0\left(\sum_{k=j_{min}}^{j_{max}}\sum_{n=0}^{N-1}e_{k,n}I_k(t)e^{-i(\omega_{io}t+\phi_{io})} + cc\right)\} + \left|E_0\sum_{k=j_{min}}^{j_{max}}\sum_{n=0}^{N-1}e_{k,n}I_k(t)+c.c.\right|^2$$

Where $E_{lo}$, $\omega_{lo}$ and $\varphi_{lo}$, represent the amplitude, frequency and phase of the local oscillator field respectively, and $E_0$ is the field of the signal,

$$e_{k,n} = d_{k,n}e^{i(\omega_k(t-\tau_k)+\phi_k)} \qquad I_k(t) = \frac{1}{2\pi}\int_{-\infty}^{\infty}h_{k,baseband}(\omega)h_{k,optical}(\omega-\omega_k)h_{k,pulse}(\omega)e^{i\omega t}d\omega$$

Where $d_{k,n}$ represents the $n^{th}$ input data bit of the $k^{th}$ channel, $\omega_k$ and $\varphi_k$ and $\tau_k$ are the frequency, phase, and delay of the $k_{th}$ channel, $h_{k,baseband}(\omega)$ is the transfer function of any base-band transmitter-side electrical filters, $h_{k,optical}(\omega)$ is the frequency response of the optical filter for the $k^{th}$ channel, $h_{k,pulse}$ is the frequency spectrum of the input pulse shape, and $T$ is the symbol rate.

Assuming that the direct detection (second term of rhs) may be neglected (true for $E_{lo} \gg E_0$, balanced detection or heterodyne detection with a suitably large separation between signal and local oscillator frequencies), this resolves into a series of cosine signals so that the detected signal from the $j^{th}$ photodiode is:

$$V_j(t) \propto E_{lo}E_0\left(\sum_{k=j_{\min}}^{j_{\max}}\sum_{n=0}^{N-1}d_{k,n}I_k(t)\cos\left((\omega_k - \omega_{lo})t + \phi_k - \phi_{lo}\right)\right)$$

An ideal electrical low pass filter is then used, such that the detected signal for the n$^{th}$ bit is then

$$S_{j,n} \propto E_{lo}E_0\left(\sum_{k=j_{\min}}^{j_{\max}}\int_{nT}^{(n+1)T}d_{k,n}I_k(t)\cos\left((\omega_k - \omega_{lo})t + \phi_k - \phi_{lo}\right).dt\right)$$

And taking the traditional condition for CoWDM or OFDM of $\omega_k = \omega_0 + 2\pi k/T$, and assuming the system response is optimized so that the pulse shape of each channel at the photodiodes (e.g. $I_k(t)$) is rectangular over one symbol period, for all channels except the target channel $\omega_j = \omega_{lo}$, the integral over an integer number of full cycles of a cosine or sine waves is zero, irrespective of the phase of the signal.

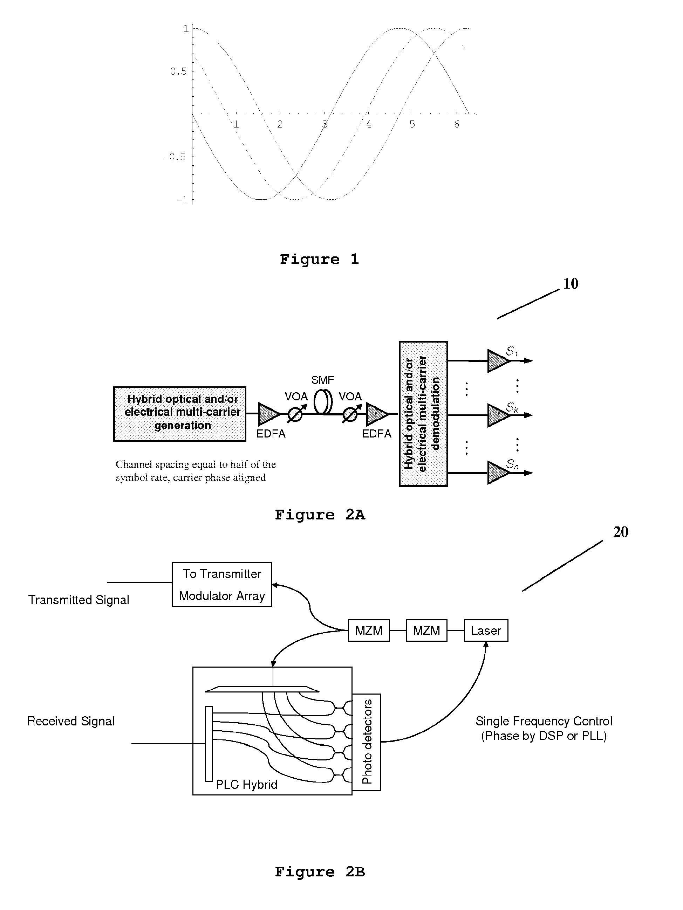

This may be observed in Figure 1, which shows three sine waves over one integration period, each of which integrates to zero. As a result, frequency spacing equal to symbol rate is achieved without any performance penalty.

However, the overall capacity of this system is limited as it is based on the frequency spacing equal to symbol rate of each sub carrier. Furthermore, an ideal system response ($I_k(t)$ and electrical low-pass filter are 1 over one symbol period) is assumed to guarantee the elimination of crosstalk from adjacent channels. In a practical system operating with a relatively high symbol rate, this operation condition is difficult to achieve, leading to residual crosstalk from adjacent channels.

OFDM and other similar communication systems are also restricted to operation with the channel spacing equal to the symbol rate, resulting in a limited overall capacity.

The object of the invention is to provide a method and system to overcome these problems by increasing the spectral density on a channel for a communication system.

## Summary of the Invention

The present invention provides, as set out in the appended claims, a method of increasing the spectral density of a channel by a factor of n for use in a communication system, where n is an integer larger than 1.

The present invention also provides a method to mitigate the residual crosstalk in a CoWDM or OFDM systems with channel spacing equal to symbol rate or a system with channel spacing equal to half of the symbol rate.

The first aspect of the invention comprises the steps of receiving, at a receiver, a plurality of sub-channels, spaced with a channel spacing equal to 1/2 times the symbol rate using a plurality of detectors; filtering the plurality of sub-channels, wherein said filtering comprises electrical low-pass filtering at the receiver, system response design (e.g. design of input signal pulse shape, transmitter-side electrical filter, optical filter), and aligning the phases of neighbouring sub-channels.

This embodiment of the invention provides a method to operate a multi-carrier communication system, such as coherent WDM or OFDM, with double the usual spectral efficiency without performance penalty by spacing the carriers at half of the symbol rate, and simultaneously optimising the relative phase of the carriers and system response. This provides a solution to the problem of increasing the transmission capacity of a communication link with a finite bandwidth.

Suitably, the invention provides that for simultaneously spacing the neighbouring sub-channels at half of the symbol rate and optimising the relative phase of the channel and system response, each output signal directly represent each input data such that the overall spectral density is doubled without performance penalty.

Ideally there is provided the step of aligning the phase of symbol carriers and optimize electrical low-pass receiver filter and system response ($I_k(t)$) such that each output signal directly represent each input data.

The phases $\phi_k$ of the aligned carriers can be represented by $\phi_k = \phi_{lo}$ and $\phi_{lo}$ is arbitrarily set to zero without loss of generality, and the carrier spacing $\omega_k$ can be represented by $\omega_k = \omega_0 + 2\pi k/2T$.

Suitably the received channel can be represented by the equation:

$$S_{j,n} \propto E_{lo}E_0 \left( \sum_{k=j_{min}}^{j_{max}} \int_{nT}^{(n+1)T} d_{k,n} I_k(t) \cos\left( (\omega_0 - \omega_{lo} + \frac{2\pi k}{2T})t \right).dt \right)$$

The electrical filter and $I_k(t)$ are ideally rectangular over one symbol period.

In another embodiment of the present invention, there is provided a method of increasing the spectral density of a channel by a factor of $n$, where $n$ is an integer larger than 2, for use in a communications system. The invention also provides a method to mitigate the residual crosstalk in a CoWDM or OFDM system with channel spacing equal to symbol rate or a system with channel spacing equal to half of the symbol rate as described above.

This embodiment comprising the steps of receiving a plurality of channels, spaced with a channel spacing equal to $1/n$ ($n>1$) times the symbol rate using a plurality of detectors; filtering said plurality of data signals such that each detector output comprises a linear combination of the input channels; simultaneously linearly processing these outputs to recover the originally transmitted information.

This embodiment provides that the weightings of the linear combination resulting in the received signals may be expressed as a transfer matrix $\underline{\textbf{M}}$ such that the received signal may be expressed as the product of $\underline{\textbf{M}}$ and another matrix $\underline{\textbf{D}}$ representing the field values of the transmitted signals as a function of channel number and timeslot. The elements in the matrix depend on channel spacing ($n$), phase of channels, system response ($I_k(t)$), and receiver electrical filter. The linear processing stage may be understood as multiplying the received matrix $\underline{\textbf{S}}$ (detector & timeslot) by the inverse $\underline{\textbf{M}}^{\underline{-1}}$ of the transfer matrix $\underline{\textbf{M}}$ so that the original input signal, $\textbf{D},$ can be recovered.

A special case of the invention pertains to $n=2$ which has been claimed in embodiment 1 where the channel spacing is equal to half of the symbol rate. In this case (embodiment 1), the invention provides a method to optimize the relative phases of the sub channels such that there is no crosstalk between the sub-channels so that the matrix $\underline{\textbf{M}}$ is diagonal (inverse matrix is a unit matrix), and therefore each output directly represents the corresponding input data signal and can be extracted without performance penalty. The outputs are typically provided from photodiodes for an optical system, mixers for an RF system and may be equivalently implemented digitally in an appropriate signal processing device.

When the channel spacing is reduced by more than half of the symbol rate, there is no way to enable each output to represent directly each input data, even when phase of input signals are aligned. However, in a linear transmission system, the photodiode outputs $\underline{\textbf{S}}$ are described by a matrix $\underline{\textbf{M}}$ (representing channel spacing, system response, phases etc) multiplying a vector $\underline{\textbf{D}}$ (representing input signals). If the matrix is in full rank, for which an inverse exists, the input signals may be obtained by multiplying the detected photodiode outputs by the inverse matrix of said matrix, $\textbf{M}^{-1}$. Conditions under which this data recovery will be possible can be determined by examining the properties of the matrix, which represents the receiver transfer function, channel spacing and/or phases.

In particular, the invention specified conditions under which the original data may be recovered (channel spacing equal to 1/n times the symbol rate) by such linear signal processing which enables the overall capacity of a link with finite bandwidth to be increased. Under these conditions, the invention provides that the transfer matrix $\underline{\textbf{M}}$ is always invertible (full rank), even for a frequency spacing very much less than the symbol rate, which enables the spectral density on the channel to be significantly increased.

The inverse matrix or weightings for a linear combination of the detector outputs can be obtained using a training sequence and updated by a certain algorithm, such as a blind channel estimation technique.

Preferably, in order to minimise the computational complexity and performance penalty, this invention provides the step of filtering the output of each detector which, in essence, reduces the amplitude of the 'off' diagonal components of said generated matrix $\underline{\textbf{M}}.$

In addition to the capability to increase the spectral density by a factor of $n$, $n$ is a integer larger than 2, this embodiment of the invention can be used to mitigate residual crosstalk in a system with channel spacing equal to half of symbol rate or a conventional CoWDM or OFDM system when the phases are not properly aligned, where the inverse matrix represents the processing function to mitigate crosstalk due to improper phase alignment and channel response.

It will be appreciated that both embodiments of the present invention increase the available capacity in a given spectral width by a factor of $n$, with $n$ being an integer larger than 1, critical for applications where spectral resource is scarce, such as optical communication systems, or modern mobile radio systems. It also provides a solution to mitigate residual crosstalk arising from imperfect phase control and non-ideal system response.

There is also provided a computer program comprising program instructions for causing a computer program to carry out the above method which may be embodied on a record medium, carrier signal or read-only memory.

## Brief Description of the Drawings

The invention will be more clearly understood from the following description of an embodiment thereof, given by way of example only, with reference to the accompanying drawings, in which:-

Figure 1 is a prior art waveform in a communication system;
Figure 2 illustrates a first embodiment of the present invention with (a) a typical setup and (b) a detailed example using coherent detected CoWDM with channel spacing equal to half of the symbol rate;
Figure 3 & 4 illustrate sine waves representative of data signals according to the present invention;
Figure 5 illustrates a second embodiment of the present invention using coherent detected CoWDM with channel spacing equal to 1/n of the symbol rate;
Figure 6 is similar embodiment to Fig. 5 using an optical multi-carrier generation and optical coherent detection system;
Figure 7 illustrates a detailed example of Figure 6 with coherent detected CoWDM;
Figure 8 illustrates a general implementation of the present invention in the electrical domain with electrical multi-carriers;
Figure 9 illustrates a detailed example of the embodiment for Fig. 8;
Figure 10 illustrates another detailed example of detailed setup for Fig. 8; and
Figure 11 illustrates a typical setup of the invention with hybrid optical and/or electrical multi-carriers.

## Detailed Description of the Drawings

In this specification the term channel or sub-channel, in communications, refers to any medium used to convey information from a sender (or transmitter) to a receiver and should be given a broad interpretation. In addition in this specification symbol rate, also known as baud or modulation rate; is the number of symbol changes (signalling events) made to a transmission medium per second using a digitally modulated signal or a line code. The symbol rate can be measured in baud (Bd) or symbols/second. In the case of a line code, the symbol rate is the pulse rate in pulses/second. Each symbol can represent or convey one or several bits of data. The term carrier or sub-carrier is used in the present invention to describe a channel and/or sub-channel, and are terms that are well known to the person skilled in the art.

Referring now to the drawings and the configuration of Figure 2a shows an example implementation of the present invention. Each sub carrier can be mixed with a dedicated local oscillator and detected. The channel spacing is equal to half of the symbol rate. By properly aligning the carrier phases, each output can directly represent the input data without performance penalty, i.e. $S_{j,n} \propto -d_{j,n}$ where $S_{j,n}$ represent the $n^{th}$ symbol from the $j^{th}$ output and $d_{j,n}$ is the $n^{th}$ symbol of the $j^{th}$ input data. Figure 2(b) shows a detailed example using coherent detected CoWDM.

Consider the case of phase aligned carriers, spaced at half of the carrier symbol rate, $\omega_k = \omega_0 + 2\pi k/2T$, and $\phi_k = \phi_{lo} = 0$. In this case the signal can be represented by:

$$S_{j,n} \propto E_{lo}E_0 \left( \sum_{k=j_{\min}}^{j_{\max}} \int_{nT}^{(n+1)T} d_{k,n} I_k(t) \cos\left( (\omega_0 - \omega_{lo} + \frac{2\pi k}{2T})t \right).dt \right)$$

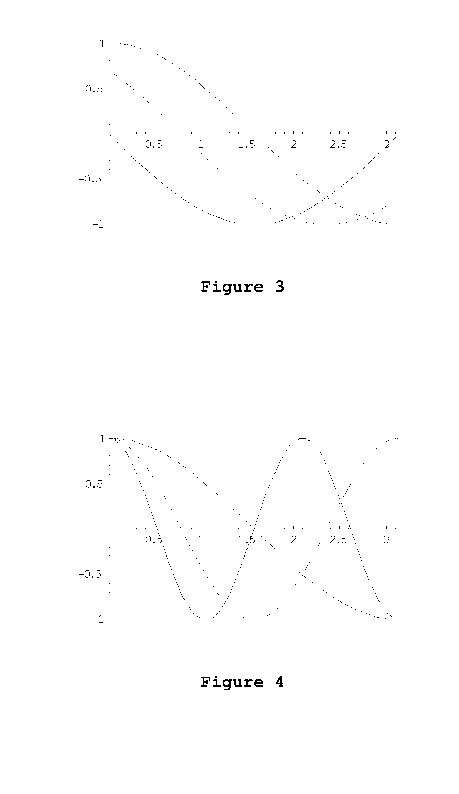

And for this phase condition, and this phase condition only, the only non-zero term in the summation is the j$^{th}$ term (target channel) because the integral of the cosine is precisely zero for this condition. This can be seen from Figures 3 and 4.

Figure 3 shows the nearest neighbour sine wave for three different phases, and clearly only the correctly phased (red) signal integrates to zero, being symmetric about the centre of the integration period (Pi/2). It interprets the necessity of phase control to enable crosstalk free according to a first aspect of the invention (channel spacing equal to half of symbol rate).

Figure 4 shows the correctly aligned signals for the three nearest neighbours, with the correct phase. All adjacent channels after integration would be zero, achieving crosstalk free.

Again all signals are symmetric around the centre of the integration period, and their integrals are zero. Thus the detected signal from each photodiode is

$$S_{j,n} \propto E_{lo} E_0 \int_{nT}^{(n+1)T} d_{j,n} I_j(t).dt$$

and is free from crosstalk. It will be appreciated that the present invention may also be applied to regular OFDM systems, as used for DSL and Radio applications.

In relation to the second embodiment of the invention, the above received signal $S_{j,n}$ may be written as the product of a matrix **M** (wavelength and timeslot) describing the transfer function of the transmission system, and a matrix **D** (wavelength and timeslot) representing the input data signals. The photodiode output then being the matrix **S** (photodiode and timeslot) with **S** = **M.D.**

If the channel spacing is $\Delta\omega$ and the local oscillator is tuned to the frequency of the target channel for each photodiode, **M** is given by (arbitrarily set $\phi_{lo}=0$ without loss of generality) (example 3x3 matrix shown).

$$\underline{M} \propto \begin{pmatrix} \int_0^T I_{0,}(t)\cos(\phi_0).dt & \int_0^T I_1(t)\cos(\Delta\omega t + \phi_1).dt & \int_0^T I_2(t)\cos(2\Delta\omega t + \phi_2).dt \\ \int_0^T I_{-1}(t)\cos(\Delta\omega t + \phi_0).dt & \int_0^T I_0(t)\cos(\phi_1).dt & \int_0^T I_1(t)\cos(\Delta\omega t + \phi_2).dt \\ \int_0^T I_{-2}(t)\cos(2\Delta\omega t + \phi_0).dt & \int_0^T I_{-1}(t)\cos(\Delta\omega t + \phi_1).dt & \int_0^T I_0(t)\cos(\phi_2).dt \end{pmatrix}$$

In the specific case described above (embodiment with carrier spacing of half the symbol rate, and all phases equal to zero), this matrix becomes:

$$\underline{M} \propto \begin{pmatrix} \int_0^T I_{0,}(t)\cos(\phi_0).dt & 0 & 0 \\ 0 & \int_0^T I_0(t)\cos(\phi_1).dt & 0 \\ 0 & 0 & \int_0^T I_0(t)\cos(\phi_2).dt \end{pmatrix}$$

Confirming the efficiency of the technique described above.

For a small channel spacing ($\Delta\omega \ll 2\pi/T$), it is assumed that the impact of the filters is negligible, to minimise ISI, and so $I_k(t)$ may be assumed constant, in which case:

$$\underline{M} \propto \begin{pmatrix} T\cos(\phi_0) & \dfrac{\sin(\Delta\omega T + \phi_1) - \sin(\phi_1)}{\Delta\omega} & \dfrac{\sin(2\Delta\omega T + \phi_2) - \sin(\phi_2)}{2\Delta\omega} \\ \dfrac{\sin(\Delta\omega T + \phi_0) - \sin(\phi_0)}{\Delta\omega} & T\cos(\phi_1) & \dfrac{\sin(\Delta\omega T + \phi_2) - \sin(\phi_2)}{\Delta\omega} \\ \dfrac{\sin(2\Delta\omega T + \phi_0) - \sin(\phi_0)}{2\Delta\omega} & \dfrac{\sin(\Delta\omega T + \phi_1) - \sin(\phi_1)}{\Delta\omega} & T\cos(\phi_2) \end{pmatrix}$$

And since in the limit $x \Rightarrow 0$, $\sin(x) \Rightarrow x$, each term in this matrix becomes close to T (equal to T if phases are zero), and the output of all photodiodes is equal, and the originally transmitted signal is undetectable, thus the channel spacing may not be set to be zero. However, for more practically spaced signals, each term does not equal zero, and even in the absence of optical filtering, the terms show a trend to decrease in proportion to their distance from the diagonal, that is, approximately as:

$$\mathrm{T} \cdot \begin{pmatrix} 1 & 1/2 & 1/3 \\ 1/2 & 1 & 1/2 \\ 1/3 & 1/2 & 1 \end{pmatrix}$$

And if this is coupled by the action of the filters to further attenuate the off axis components, the matrix becomes more diagonal, increasing the range of parameters for which it is invertible. As a result, the input data can be extracted by multiplying an inverse matrix to the outputs $\underline{D}$ = $\underline{M^{-1}}.\underline{S}$, where $\underline{S}$ and $\underline{D}$ are the outputs from coherent electrical/optical demodulators and the transmitted input signals.

It will be appreciated that the matrix inversion described above can not only increase the spectral efficiency by reducing the channel spacing to 1/n of the symbol rate (n is integer larger than 2) but also compensate for errors in phase setting of the sub-channels, and reduces impairment arising from residual crosstalk in a traditional CoWDM or OFDM system, or a system with channel spacing half of the symbol rate as described above.

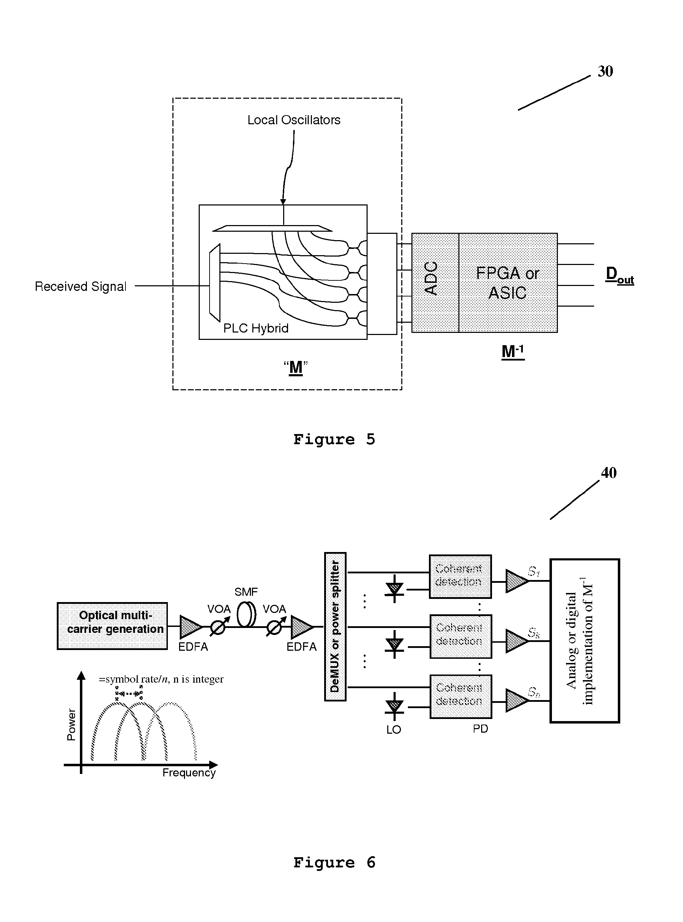

Figures 5 and 6 illustrate an example of the present invention, indicated generally by the reference numerals 30 and 40. Multi-carrier signals are generated in the optical domain and coherent detection is used for demodulation of the transmitted signals. The demodulated part can be achieved by electrical/optical devices or an integrated PLC as shown in Figure 5.

The signals from the photodiodes are the linear combination (matrix $\underline{M}$) of the input data. Therefore, multiplying the output signal from the photodiodes by an inverse matrix $\underline{M^{-1}}$, the input data can be recovered. The implementation of the inverse matrix can be either analogue or digital (FPGA, ASIC etc). The channel spacing is 1/$n$, $n$ is integer, representing the increase of spectral density by a factor of $n$. The matrix method can be also used for $n$ of 1 (CoWDM or OFDM system) and 2 (embodiment 1 of the invention) to mitigate the residual crosstalk from imperfect phase and system response.

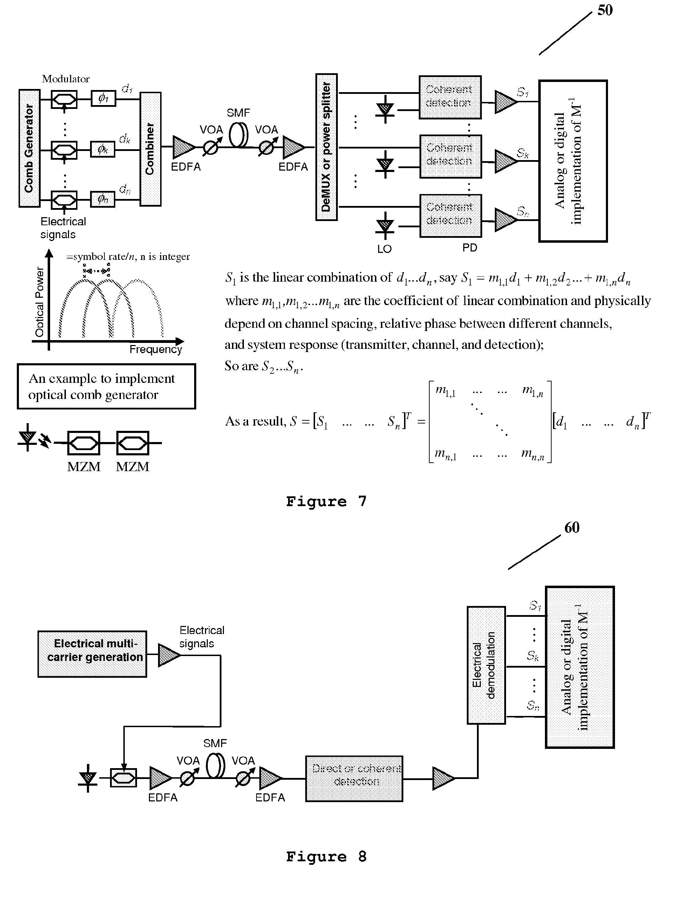

Fig. 7 illustrates a detailed embodiment of Fig. 6, indicated generally by the reference numeral 50, using coherent detected CoWDM. The channel spacing is set to equal 1/$n$ of symbol rate, when n is an integer.

For n=1 or 2, the matrix shown in Fig. 7 is diagonal when input phases are properly aligned and each output directly represents each input data. When the phases are not aligned, it is not diagonal but by multiplying the matrix by an inverse matrix, the input $\underline{D}$ can be recovered, representing mitigation of the residual crosstalk due to improper phase alignment.

When the channel spacing is less than half the symbol rate (e.g. ¼ of the symbol rate or n=4), the matrix will not be diagonal even phases are aligned. But the input signals can be extracted by multiplying an inverse matrix to the output signals $\underline{S}$. The filtering can be designed to reduce the off components in the matrix and improve the performance in inverse matrix multiplication to retrieve the data from detected symbols.

Fig. 8 illustrates an implementation of the present invention in the electrical domain with electrical multi-carriers and electrical demodulation, indicated generally by the reference numeral 60. The operation of this system is the same as set out above.

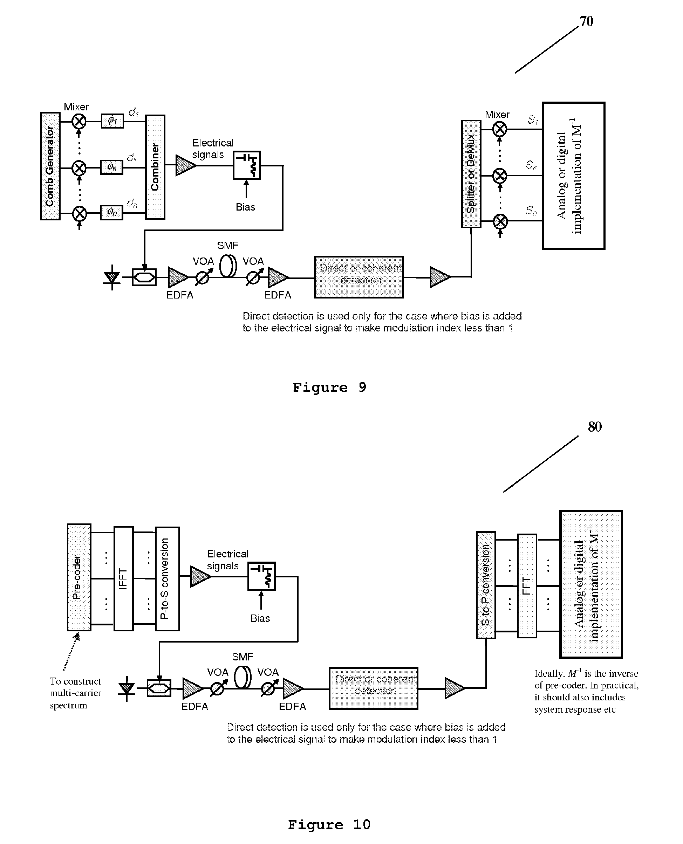

Figures 9 and 10 illustrate two detailed example and detailed set-ups for operation Fig. 8. In Fig. 9, indicated generally by the reference numeral 70, shows how the electrical multi-carrier signals can be generated by combining each carrier signal using a power combiner. Each carrier signal is generated by multiplying carriers with baseband signal by using mixers. The multi carrier electrical signal is modulated by an optical carrier, transmitted and detected by a photodiode. Coherent detection is used to maintain the linear property of the transmission system. However, direct detection can be also employed when the multi carrier electrical signal is biased with a modulation index less than 1. The electrical multi carrier signal is demodulated using mixers to output $\underline{S}$, which is multiplied by $\underline{M^{-1}}$ to recover the input data $\underline{D}$.

Fig. 10, indicated generally by the reference numeral 80, implements the generation and demodulation of electrical multi carrier using FFT and IFFT rather than mixers, the pre-coder is used to construct the multi carrier spectrum with channel spacing equal to 1/$n$ of symbol rate while $\underline{M^{-1}}$ is used to decode the demodulated signal to recover the original input data.

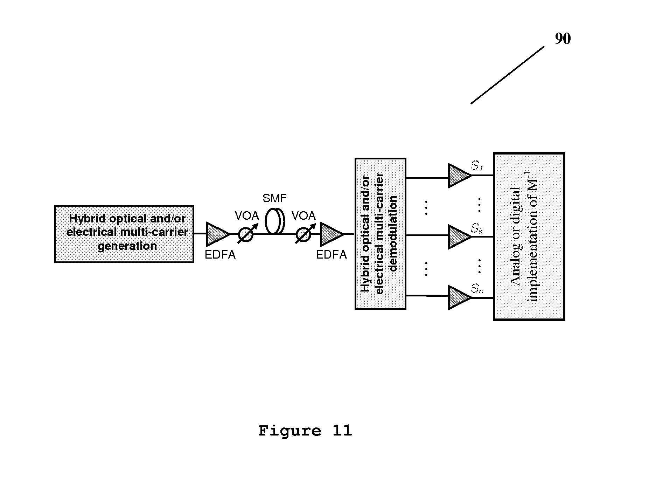

Figure 11, indicated generally by the reference numeral 90, summarizes implementations in Fig. 5-Fig. 10, illustrating a typical set-up of the invention with hybrid optical and/or electrical multi-carriers, that again operate as set out in the above description.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

**Claims**

1.  A method of increasing the spectral density of a channel, for use in a communication system, the method comprising the steps of:

    receiving, at a receiver, a plurality of sub-channels,
    at least one sub-channel comprising at least one symbol carrier transmitted at a symbol rate;
    **characterised in that** the method comprises spacing neighbouring sub-channels equal to 1/n times the symbol rate, wherein n is an integer.

2.  The method of claim 1 comprising the step of aligning the phase of at least one sub-channel with respect to the phases of neighbouring sub-channels.

3.  The method of claim 1 wherein n equals 2.

4.  The method of claim 3 comprising the step of filtering using an electrical low-pass filter and system response such that each output signal directly represent each input data.

5.  The method of claim 1 or 2 comprising simultaneously spacing the neighbouring sub-channels at half of the symbol rate and optimising the relative phase of the symbol carriers and system response such that the spectral density of said channel is doubled.

6.  The method of claim 1 or 2 comprising the steps of using a plurality of detectors to receive said plurality of sub-channels to provide a plurality of data signals; filtering said plurality of data signals such that each detector output comprises a linear combination of the input channels; simultaneously linearly processing said outputs to recover the originally transmitted data information.

7.  The method as claimed in any preceding claim comprising the further step of representing each detector output as a linear combination of the input sub-channels; applying weightings to said linear combination resulting in the received signals as a transfer matrix $\underline{\mathbf{M}}$, such that the received sub-channels may be expressed as the product of $\underline{\mathbf{M}}$ and another matrix $\underline{\mathbf{D}}$ representing the field values of the transmitted sub-channels as a function of channel number and timeslot.

8.  The method as claimed in claim 7 comprising a linear processing stage by multiplying a received matrix $\underline{\mathbf{S}}$ (detector & timeslot) by the inverse $\underline{\mathbf{M}}^{\mathbf{-1}}$ of the transfer matrix $\underline{\mathbf{M}}$ so that the original input signal, $\underline{\mathbf{D}}$, can be recovered.

9.  The method as claimed in claims 7 or 8, wherein the outputs are generated from photodiodes for an optical system, to provide a linear combination of the input signals, such that outputs contains sufficient information to extract transmitted carrier symbol information.

10. The method of any of claims 6 to 8 wherein the diagonal of said matrix M such that outputs directly represent each input data and spectral density is doubled without performance penalty when n=2.

11. The method as claimed in claim 7 to 10wherein the inverse matrix is obtained using a training sequence and updated by using, for example, a blind estimation technique.

12. The method as claimed in any of claims 7 to 11 comprising the step of filtering the output of each detector to reduce the amplitude of the 'off' diagonal components of matrix $\underline{\mathbf{M}}$ to minimise the computational complexity in generating said matrix.

**13.** The method as claimed in any of claims 7 to 11 wherein the matrix represents one or more of the following: the receiver transfer function, system response, channel spacing and/or phase control and the inverse matrix represents the processing function to mitigate crosstalk due to improper phase alignment and channel response.

**14.** The method as claimed in any preceding claim wherein the received channel is represented by:

$$S_{j,n} \propto E_{lo} E_0 \left( \sum_{k=j_{\min}}^{j_{\max}} \int_{nT}^{(n+1)T} d_{k,n} I_k(t) \cos\left((\omega_k - \omega_{lo})t + \phi_k - \phi_{lo}\right).dt \right)$$

**15.** A system comprising means to perform the method of any of claims 1 to 14.

**Figure 1**

**Figure 2A**

**Figure 2B**

**Figure 3**

**Figure 4**

30

Local Oscillators

Received Signal

PLC Hybrid

"**M**"

ADC

FPGA or
ASIC

**M⁻¹**

$\underline{D}_{out}$

**Figure 5**

40

Optical multi-carrier generation

EDFA

VOA

SMF

VOA

EDFA

DeMUX or power splitter

Coherent detection

Coherent detection

Coherent detection

$S_1$

$S_k$

$S_n$

LO

PD

Analog or digital implementation of M⁻¹

=symbol rate/$n$, n is integer

Power

Frequency

**Figure 6**

Modulator

$d_1$

$\phi_1$

$d_k$

$\phi_k$

$d_n$

$\phi_n$

Comb Generator

Combiner

Electrical signals

SMF

VOA

VOA

EDFA

EDFA

DeMUX or power splitter

Coherent detection

Coherent detection

Coherent detection

$S_1$

$S_k$

$S_n$

LO

PD

Analog or digital implementation of $M^{-1}$

=symbol rate/$n$, $n$ is integer

Optical Power

Frequency

An example to implement optical comb generator

MZM   MZM

$S_1$ is the linear combination of $d_1...d_n$, say $S_1 = m_{1,1}d_1 + m_{1,2}d_2... + m_{1,n}d_n$

where $m_{1,1}, m_{1,2}...m_{1,n}$ are the coefficient of linear combination and physically depend on channel spacing, relative phase between different channels, and system response (transmitter, channel, and detection);

So are $S_2...S_n$.

$$\text{As a result, } S = \begin{bmatrix} S_1 & ... & ... & S_n \end{bmatrix}^T = \begin{bmatrix} m_{1,1} & ... & ... & m_{1,n} \\ & \ddots & & \\ & & \ddots & \\ m_{n,1} & ... & ... & m_{n,n} \end{bmatrix} \begin{bmatrix} d_1 & ... & ... & d_n \end{bmatrix}^T$$

**Figure 7**

60

Electrical multi-carrier generation

Electrical signals

SMF

VOA

VOA

EDFA

EDFA

Direct or coherent detection

Electrical demodulation

$S_1$

$S_k$

$S_n$

Analog or digital implementation of $M^{-1}$

**Figure 8**

Figure 9

Figure 10

Figure 11

| Europäisches Patentamt European Patent Office Office européen des brevets | **EUROPEAN SEARCH REPORT** | Application Number EP 08 17 2808 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUQIN XIONG: "M -ary amplitude shift keying OFDM system" IEEE TRANSACTIONS ON COMMUNICATIONS, vol. 51, no. 10, 1 October 2003 (2003-10-01), pages 1638-1642, XP011102440 ISSN: 0090-6778 * abstract * * page 1 * * section IV * * figure 1 * ----- | 1-20 | INV. H04L27/26 |
| X | LI K ET AL: "System performance comparison of fast-OFDM with overlapping MC-DS-CDMA and MT-CDMA systems" PROCEEDINGS OF THE 6TH INTERNATIONAL CONFERENCE ON INFORMATION, COMMUNICATIONS AND SIGNAL PROCESSING, 10 December 2007 (2007-12-10), pages 1-4, XP031229669 ISBN: 978-1-4244-0982-2 * abstract * * section I * * subsection IIA * * figure 1 * ----- | 1-20 | TECHNICAL FIELDS SEARCHED (IPC) H04L |

The present search report has been drawn up for all claims

| Place of search | Date of completion of the search | Examiner |
|---|---|---|
| The Hague | 28 May 2009 | Anghel, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007043032 A